# EUROPEAN PATENT SPECIFICATION

(11) **EP 3 266 599 B1**
(45) Date of publication and mention of the grant of the patent: **23.09.2020**
(21) Application number: 17175759.4
(22) Date of filing: 13.06.2017
(51) Int. Cl.: B29D 30/06

(54) **TIRE VULCANIZING APPARATUS**
REIFENVULKANISIERUNGSVORRICHTUNG
VULCANISATEUR DE PNEUS

(30) Priority: 05.07.2016 JP 2016133498
(43) Date of publication of application: 10.01.2018
(73) Proprietor: Sumitomo Rubber Industries, Ltd., Kobe-shi, Hyogo-ken (JP)
(72) Inventor: TANAKA, Takashi, Kobe-shi, Hyogo 651-0072 (JP); HAYASHI, Kazuo, Kakogawa-shi, Hyogo 675-8511 (JP)
(74) Representative: Manitz Finsterwald Patent- und Rechtsanwaltspartnerschaft mbB

(56) References cited:
- WO-A1-01/00395
- GB-A- 2 120 967
- JP-A- 2006 027 208
- JP-A- 2010 131 864
- JP-A- 2012 166 405

## Description

### Technical Field

The present invention relates to a tire vulcanizing apparatus comprising a tire-vulcanizing bladder for pressing an unvulcanized tire against an vulcanizing mold for vulcanization-molding.

### Background Art

Heretofore, in order to vulcanization-mold an unvulcanized tire, a tire vulcanizing apparatus comprising a tire-vulcanizing bladder is widely employed, wherein the tire-vulcanizing bladder is placed in the unvulcanized tire and inflated with a high-temperature fluid.

In such a tire vulcanizing apparatus, steam is widely used as a high-temperature fluid from a point of view of the cost, heat transfer capability and the like.
However, when steam transfers its heat to an unvulcanized tire via a tire-vulcanizing bladder, the steam is condensed into water, and there is a possibility that the condensed water is accumulated in the tire-vulcanizing bladder.

The condensed water in the tire-vulcanizing bladder tends to decrease the temperature of the unvulcanized tire in a region adjacent to the condensed water in comparison with the temperature in a region not adjacent thereto. As a result, there is a possibility that, due to the result uneven vulcanization, physical properties of the vulcanized tire become uneven and tire performance is deteriorated. Further, the temperature decrease necessitates prolongation of the tire vulcanizing time, which hinders the productivity of the tires.

Japanese Patent Application Publication No.2010-110970 (Patent document 1) discloses a tire vulcanizing apparatus, wherein, in order to equalize the interior temperature of a tire-vulcanizing bladder, steam is continuously widely spread in the tire-vulcanizing bladder, In the apparatus disclosed in Patent document 1, even if the condensed water is accumulated in the bladder, a fatal decrease in the temperature of the accumulated condensed water may be prevented by the continuously widely spread steam. However, to continuously widely spread the steam consumes a lot of energy, and the fundamental problem of the accumulation of the condensed water in a lower portion of the tire-vulcanizing bladder is not solved yet.

JP 2012-166405 A discloses a tire vulcanizing apparatus in accordance with the preamble of claim 1.

### Summary of the Invention

It is therefore, an object of the present invention to provide a tire vulcanizing apparatus, in which condensed water in a tire-vulcanizing bladder can be smoothly discharged by employing a tire-vulcanizing bladder of a dual structure.

According to one aspect of the present invention, a tire vulcanizing apparatus compresses:
a vulcanizing mold for vulcanization-molding an unvulcanized tire,
a tire-vulcanizing bladder assembly to be disposed in the inner cavity of the unvulcanized tire disposed in the vulcanizing mold, and being inflatable with a fluid so as to press the unvulcanized tire against the vulcanizing mold,
a supply means for supplying the fluid to the tire-vulcanizing bladder assembly, and
a discharge means for discharging the fluid from the tire-vulcanizing bladder assembly,
wherein
the tire-vulcanizing bladder assembly compresses
an outside bladder for abutting on the inner surface of the unvulcanized tire, and
an inside bladder disposed inside the outside bladder, and the fluid includes
a first fluid supplied between the outside bladder and the inside bladder, and
a second fluid supplied to the inside of the inside bladder.

Further, the tire vulcanizing apparatus according to claim 1 includes the following features (4) to (6) and may also include the optional features (1)-(3) and (7) and (8):
(1) when the tire-vulcanizing bladder assembly is inflated, a flow path in which the first fluid flows is formed between the outside bladder and the inside bladder;
(2) the first fluid is steam;
(3) the second fluid is steam, nitrogen gas or hot water;
(4) the vulcanizing mold comprises an upper die to be located on the upper side of the unvulcanized tire, and a lower die to be located on the lower side of the unvulcanized tire,
   the outside bladder comprises an upper first bead secured to the upper die, and a lower second bead secured to the lower die, and
   the inside bladder comprises an upper third bead secured to the upper die, and a lower fourth bead secured to the lower die;
(5) the supply means comprises a first supply means for supplying the first fluid, and a second supply means for supplying the second fluid,
   the first supply means is disposed between the upper first bead and the upper third bead, and
   the second supply means is disposed inside the lower fourth bead;
(6) the discharge means is disposed between the lower second bead and the lower fourth bead;
(7) in the tire-vulcanizing bladder assembly, only one inside bladder is disposed inside the outside bladder, or
(8) in the tire-vulcanizing bladder assembly, a plurality of the inside bladders are disposed inside the outside bladder.

The following disclosure relating to a tire vulcanizing method for vulcanization-molding an unvulcanized tire while the unvulcanized tire disposed in a vulcanizing mold is pressed against the vulcanizing mold by the use of an outside bladder abutting on the inner surface of the unvulcanized tire and an inside bladder disposed inside the outside bladder is provided as background for understanding the present disclosure. Such a method comprises the following steps:
a first supply process of supplying a first fluid between the outside bladder and the inside bladder,
a discharge process of discharging the first fluid between the outside bladder and the inside bladder,
a second supply process of supplying a second fluid to the inside of the inside bladder, wherein
by the first supply process and the discharge process, during vulcanization-molding the unvulcanized tire, the first fluid continuously flows through a path formed between the outside bladder and the inside bladder.

Therefore, in the tire vulcanizing apparatus according to the present invention, by inflating the outside bladder with the first fluid, the unvulcanized tire is pressed against the vulcanizing mold by the inflated outside bladder so that the unvulcanized tire is molded.
By inflating the inside bladder with the second first fluid, the space formed between the outside bladder and the inside bladder is decreased in the volume, therefore, the condensation of steam becomes hard to occur.
Further, even if the steam is condensed into water in the space, the accumulation of the condensed water is hard to occur. Therefore, the temperature decrease of the unvulcanized tire due to the accumulated condensed water can be suppressed. Thus, physical properties of the vulcanized tire can be prevented from becoming uneven and tire performance can be improved.
Further, as the volume of the above-mentioned space is small, the first fluid to be supplied to the space is reduced, therefore, the required energy is also reduced.

In the exemplary tire vulcanizing method described in the present disclosure, by the first supply process, the unvulcanized tire is pressed against the vulcanizing mold by the inflated outside bladder so that the unvulcanized tire is molded. By the discharge process, even if the steam is condensed into water in the space between the outside bladder and the inside bladder, the condensed water can be smoothly discharged. By the second supply process, the space between the outside bladder and the inside bladder can be decreased in the volume. Therefore, the temperature decrease of the unvulcanized tire due to the accumulated condensed water can be suppressed, and physical properties of the vulcanized tire can be prevented from becoming uneven and tire performance can be improved. By the first supply process and the discharge process, during vulcanization-molding the unvulcanized tire, the first fluid continuously flows through a path formed between the outside bladder and the inside bladder, therefore, the water condensed between the outside bladder and the inside bladder is continuously discharged.
Further, since the volume of the space between the outside bladder and the inside bladder is reduced, the volume of the first fluid can be reduced, and the energy required to continuously flow the fresh first fluid can be also reduced.

### Brief Description of the Drawings

Fig. 1(a) and Fig. 1(b) are a schematic cross sectional partial view of a tire vulcanizing apparatus according to one aspect of the present invention, wherein Fig. 1(a) shows a state in which condensed water is not accumulated, and Fig. 1(b) shows a state in which condensed water is accumulated.
Fig. 2(a) and Fig. 2(b) are graphs showing the temperature change of the unvulcanized tire with vulcanizing time.
Fig. 3(a) and Fig. 3(b) are graphs showing the amount of equivalent cure unit as a function the vulcanizing time.

### Description of the Preferred Embodiments

Embodiments of the present invention will now be described in detail in conjunction with the accompanying drawings.

In the drawings, tire vulcanizing apparatus 1 according to the present invention comprises
a vulcanizing mold 2 for vulcanization-molding an unvulcanized tire T disposed therein,
a tire-vulcanizing bladder assembly 3 for pressing the unvulcanized tire T against the vulcanizing mold 2,
a supply means 4 for supplying a fluid to the tire-vulcanizing bladder assembly 3, and
a discharge means 5 for discharging the fluid in the tire-vulcanizing bladder assembly 3.

The vulcanizing mold 2 comprises an upper die 6 to be located on the upper side of the unvulcanized tire T, and a lower die 7 to be located on the lower side of the unvulcanized tire T.

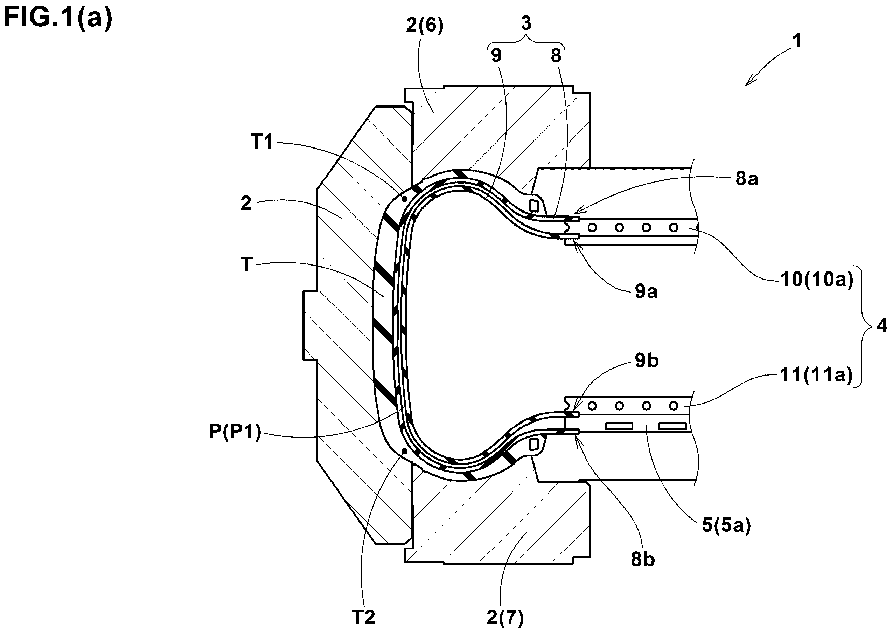

The vulcanizing mold 2 has a closed state in which the upper die 6 and the lower die 7 are closed as shown in Fig. 1(a), and an open state in which the upper die 6 and the lower die 7 are apart from each other in the vertical direction (not shown). Incidentally, in the open state, the unvulcanized tire T is carried therein, and the vulcanized tire T is took out therefrom. And in the closed state, the unvulcanized tire T in the vulcanizing mold 2 is vulcanization-molded.

when the unvulcanized tire T is vulcanization-molded, the tire-vulcanizing bladder assembly 3 is placed in the inner cavity of the unvulcanized tire T and inflated so as to presses the unvulcanized tire T against the vulcanizing mold 2.

The tire-vulcanizing bladder assembly 3 comprises an outside bladder 8 abutting on the inner surface of the unvulcanized tire T, and at least one inside bladder 9 disposed inside the outside bladder 8. In this embodiment, only one inside bladder 9 is disposed inside the outside bladder 8.

The outside bladder 8 has an upper first bead 8a secured to the upper die 6 and a lower second bead 8b secured to the lower die 7. It is preferable that the outside bladder 8 is inflated with a first fluid as the heated fluid, that is, the first fluid is supplied to the space P formed between the outside bladder 8 and the inside bladder 9.

The inside bladder 9 has an upper third bead 9a secured to the upper die 6 and a lower fourth bead 9b secured to the lower die 7. It is preferable that the inside bladder 9 is inflated with a second fluid different from the first fluid, that is, the fluid includes the first fluid and the second fluid. The second fluid may be the heated fluid or non-heated fluid.

By inflating the outside bladder 8, the tire-vulcanizing bladder assembly 3 can press the unvulcanized tire T against the vulcanizing mold 2 to mold the tire.

By inflating the inside bladder 9, the space P formed between the outside bladder 8 and the inside bladder 9 can be decreased in the volume. As a result, condensed water D is hard to occur in the space P.

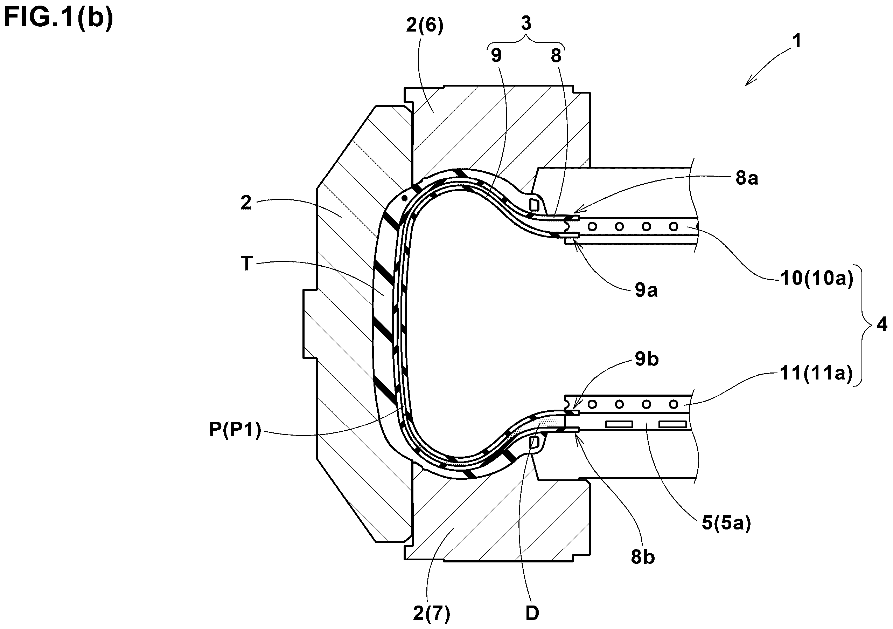

Further, even if condensed water D occurs in the space P as shown in Fig. 1(b), the volume of the condensed water D is less, and it is easy to discharge. Therefore, in the tire vulcanizing apparatus 1 in this embodiment, the temperature decrease of the unvulcanized tire T due to the condensed water D is suppressed. Thus, physical properties of the vulcanized tire can be prevented from becoming uneven and tire performance can be improved.

In this embodiment, the supply means 4 includes a first supply means 10 for supplying the first fluid, and a second supply means 11 for supplying second fluid as shown in Fig. 1(a) and Fig. 1(b).

It is preferable that the first supply means 10 comprises a plurality of first supply ports 10a for supplying the first fluid. The first supply ports 10a are opened between the upper first bead 8a and the upper third bead 9a.

In this example, the first fluid inflating the outside bladder 8 is steam which is excellent in the heat transfer capability, and can increase the temperature of the outside bladder 8 at a lower cost. Incidentally, the first fluid is supplied to the first supply means 10 from a steam generator (not shown).

It is preferable that the second supply means 11 comprises a plurality of second supply ports 11a for supplying the second fluid. The second supply ports 11a are opened in the inside of the inside bladder 9 near the lower fourth bead 9b.

As the second fluid inflating the inside bladder 9, steam, nitrogen gas or hot water can be used. In this embodiment, the second fluid is nitrogen gas supplied from a gas supply source (not shown). The nitrogen gas can be heated in the second supply means 11 by the use of a heater (not shown) or the first fluid. incidentally, if the second fluid is steam, the second fluid can be supplied from the steam generator (not shown) of the first fluid.
when the outside bladder 8 and the inside bladder 9 are inflated, it is preferable that the inside pressure of the outside bladder 8 is substantially the same as the inside pressure of the inside bladder 9 in order that the space P is stably formed between the outside bladder 8 and the inside bladder 9.

The space P between the outside bladder 8 and the inside bladder 9 can be decreased in volume. Thus, the volume of the first fluid can be decreased accordingly. As a result, the required energy can be reduced.

By heating the second fluid, the first fluid can be supplied with heat from the second fluid, therefore, even if the heat capacity is small, the occurrence of uneven temperature distribution can be prevented.

Thus, in the tire vulcanizing apparatus 1, the temperature of the tire during vulcanization is maintained, and the vulcanizing time is reduced, therefore, the productivity can be improved.

In this embodiment, the discharge means 5 comprises a plurality of exhaust ports 5a for discharging the first fluid. The exhaust ports 5a are located near the lower second bead 8b and the lower fourth bead 9b and communicate with the space P between the outside bladder 8 and the inside bladder 9 in order to discharge the first fluid in the space P.

The second fluid in the inside bladder 9 is preferably discharged by the second supply means 11 after the tire T has been vulcanization-molded.

As described above, the first supply ports 10a of the first supply means 10 are opened on the upper die 6 side, and the exhaust ports 5a of the discharge means 5 are opened on the lower die 7 side. Therefore, when the outside bladder 8 and the inside bladder 9 are inflated, the space P between the outside bladder 8 and the inside bladder 9 forms a flow path P1 in which the first fluid flows.

If the steam (first fluid) is condensed into water D in the space P, the condensed water D flows in the flow path P1 together with the first fluid and can be smoothly discharged through the exhaust ports 5a.

Next, an exemplary tire vulcanizing method in which an unvulcanized tire T is vulcanization-molded by the tire vulcanizing apparatus 1 shown in Fig. 1(a) and Fig. 1(b), is described.

In the tire vulcanizing method,
by the use of the outside bladder 8 abutting on the inner surface of the unvulcanized tire T and the inside bladder 9 disposed inside the outside bladder 8,
the unvulcanized tire T is pressed against the vulcanizing mold 2 and vulcanization-molded.

In this embodiment, the tire vulcanizing method comprises a preparatory process, a first supply process, a discharge process, a second supply process and a demolding process.

In the tire vulcanizing method, firstly, the preparatory process is carried out, wherein the unvulcanized tire T is placed in the vulcanizing mold 2 in the open state thereof. At this stage, the tire-vulcanizing bladder assembly 3 of which the outside and inside bladders 8 and 9 are deflated, is placed in the inner cavity of the unvulcanized tire T. Then, the vulcanizing mold 2 is closed.

Next, the first supply process is carried out, wherein the heated first fluid is supplied between the outside bladder 8 and the inside bladder 9, and the unvulcanized tire T is pressed against the vulcanizing mold 2 by the outside bladder 8 so that the unvulcanized tire T is vulcanization-molded. In the first supply process in this embodiment, steam is used as the first fluid inflating the outside bladder 8.

The discharge process is a process in which the first fluid between the outside bladder 8 and the inside bladder 9 is discharged. By the discharge process, the condensed water D occurred in the space P between the outside bladder 8 and the inside bladder 9 is also discharged smoothly.

Preferably in this embodiment, the discharge process is carried out concurrently with the first supply process so that the fresh first fluid is continuously supplied during the unvulcanized tire T is vulcanization-molded, In this case, the feed rate of the first fluid by the first supply process and the discharge rate of the first fluid by the discharge process are controlled so that the inside pressure of the outside bladder 8 becomes substantially constant and the outside bladder 8 is stably inflated.

The second supply process is a process in which the second fluid is supplied to the inside of the inside bladder 9 so that the space P between the outside bladder 8 and the inside bladder 9 is reduced in the volume.
By reducing the volume of the space P, the volume of the first fluid is reduced, and the required energy can be reduced.

Preferably in this embodiment, the second supply process is carried out concurrently with the first supply process and the discharge process.

The second fluid supplied in the second supply process can be heated, In this case, it is possible to transfer the heat from the second fluid to the first fluid. As a result, it is possible to more effectively suppress the temperature decrease of the unvulcanized tire T due to the condensed water D, which helps to prevent physical properties of the vulcanized tire from becoming uneven and to improve tire performance. Further, the tire temperature during vulcanization is maintained, and the vulcanizing time can be reduced to improve the productivity.

Next, the demolding process is carried out, wherein the first fluid in the space P is discharged by the discharge means 5, the second fluid in the inside bladder 9 is discharged by the second supply means 11, the vulcanizing mold 2 is opened, and then the vulcanized tire is took out from the vulcanizing mold 2.
while detailed description has been made of specific embodiments of the present invention, the specific embodiments should not be construed as to limit the scope of the present invention; the present invention may be embodied in various forms within the scope of protection, which is defined by the claims.

In the above described embodiment, only one inside bladder 9 is disposed inside the outside bladder 8. But, it is also possible to dispose two or more inside bladders 9 in the outside bladder 8. In this case, the inside bladders 9 may be those separated in the up-down direction or those separated in the circumferential direction.

### Comparison Tests

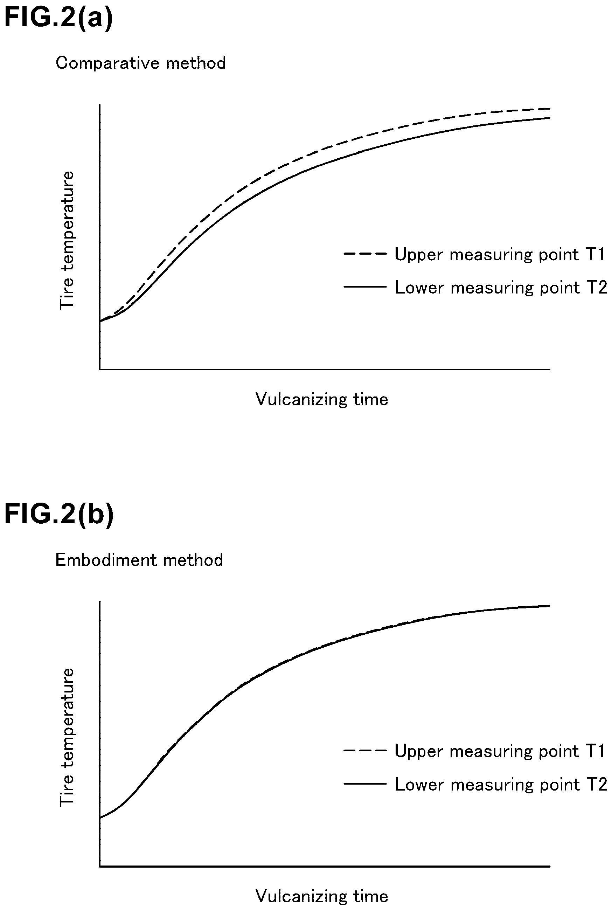

unvulcanized tires (tire size 205/60R16) were vulcanization-molded according to
the above described tire vulcanizing method (example method) using the outside bladder 8 and the inside bladder 9 shown in Fig. 1(a) and Fig. 1(b), and
a tire vulcanizing method (comparative method) using only the outside bladder 9.
The temperature of the unvulcanized tire during being vulcanization-molded was measured at two measuring points T1 and T2 shown in Fig. 1(a).
The measured result of the comparative method is shown in Fig. 2(a). The measured result of the example method is shown in Fig. 2(b).
As shown, in the comparative method, a significant temperature difference was caused between the measuring points T1 and T2. However, in the example method, the temperature difference became substantially zero over the entire temperature range.

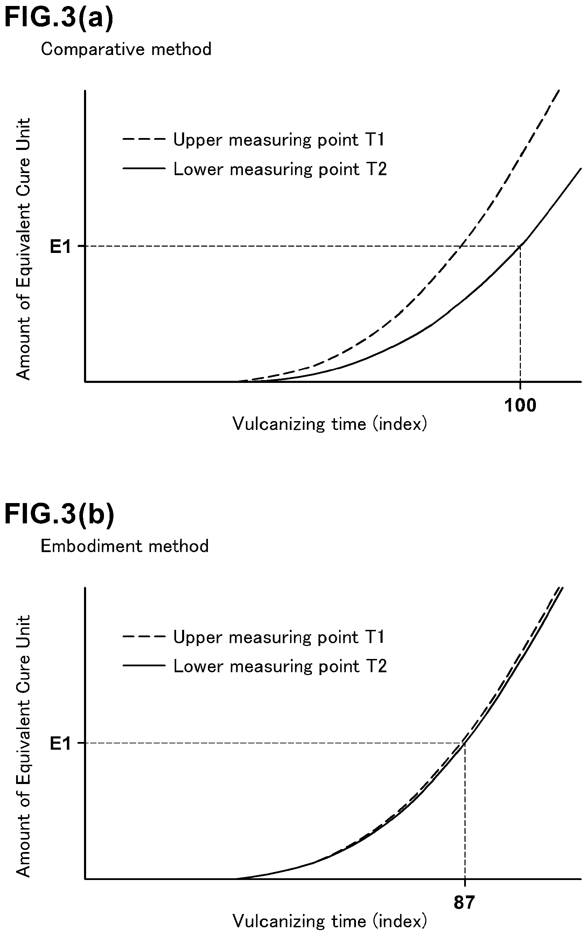

Further, based on each temperature change curve obtained in the comparative method and the example method, the equivalent cure unit (ECU) was computed.
The result of the comparative method is shown in Fig. 3(a), and the result of the example method is shown in Fig. 3(b), wherein the amount of the equivalent cure unit (ECU) is shown as a function of the vulcanizing time (index), and
E1 denotes an amount of the equivalent cure unit required to complete the vulcanization of the tire.
The vulcanizing time needed to reach to E1 by the example method was reduced to 87% of the vulcanizing time needed to reach to E1 by the comparative method.

### Reference Signs List

- 1: tire vulcanizing apparatus
- 2: vulcanizing mold
- 3: tire-vulcanizing bladder assembly
- 4: supply means
- 5: discharge means
- 8: outside bladder
- 9: inside bladder
- T: unvulcanized tire

## Claims

1. A tire vulcanizing apparatus (1) comprising:
a vulcanizing mold (2) for vulcanization-molding an unvulcanized tire (T), the vulcanizing mold (2) comprising an upper die (6) to be located on the upper side of the unvulcanized tire (T) and a lower die (7) to be located on the lower side of the unvulcanized tire (T),
a tire-vulcanizing bladder assembly (3) to be disposed in the inner cavity of the unvulcanized tire (T) disposed in the vulcanizing mold (2), and being inflatable with a fluid so as to press the unvulcanized tire (T) against the vulcanizing mold (2),
a supply means (4) for supplying the fluid to the tire-vulcanizing bladder assembly (3), and
a discharge means (5) for discharging the fluid from the tire-vulcanizing bladder assembly (3),
wherein
the tire-vulcanizing bladder assembly (3) compresses an outside bladder (8) for abutting on the inner surface of the unvulcanized tire (T), and an inside bladder (9) disposed inside the outside bladder (8), and
the fluid includes a first fluid supplied between the outside bladder (8) and the inside bladder (9), and a second fluid supplied to the inside of the inside bladder (9),
wherein the supply means (4) comprise a first supply means (10) for supplying the first fluid, and a second supply means (11) for supplying the second fluid,
**characterized in that**
the outside bladder (8) comprises an upper first bead (8a) secured to the upper die (6) and a lower second bead (8b) secured to the lower die (7), and the inside bladder (9) comprises an upper third bead (9a) secured to the upper die (6) and a lower fourth bead (9b) secured to the lower die (7),
with the first supply means (10) being disposed between the upper first bead (8a) and the upper third bead (9a), the second supply means (11) being disposed inside the lower fourth bead (9b), and the discharge means (5) being disposed between the lower second bead (8b) and the lower fourth bead (9b).

2. The tire vulcanizing apparatus (1) according to claim 1, wherein, when the tire-vulcanizing bladder assembly (3) is inflated, a flow path (P1) in which the first fluid flows is formed between the outside bladder (8) and the inside bladder (9).

3. The tire vulcanizing apparatus (1) according to claim 1 or 2, wherein the first fluid is steam.

4. The tire vulcanizing apparatus (1) according to claim 1, 2 or 3, wherein the second fluid is steam, nitrogen gas or hot water.

5. The tire vulcanizing apparatus (1) according to any one of claims 1-4, wherein in the tire-vulcanizing bladder assembly (3), only one inside bladder (9) is disposed inside the outside bladder (8).

6. The tire vulcanizing apparatus (1) according to any one of claims 1-5, wherein, in the tire-vulcanizing bladder assembly (3), a plurality of inside bladders (9) are disposed inside the outside bladder (8).

## Patentansprüche

1. Reifenvulkanisiervorrichtung (1), umfassend:
eine Vulkanisierform (2) zum Vulkanisationsformen eines unvulkanisierten Reifens (T), wobei die Vulkanisierform (2) eine obere Formhälfte (6), die auf der Oberseite des unvulkanisierten Reifens (T) anzuordnen ist, und eine untere Formhälfte (7), die auf der Unterseite des unvulkanisierten Reifens (T) anzuordnen ist, umfasst,
eine Reifenvulkanisierbalganordnung (3), die in dem inneren Hohlraum des in der Vulkanisierform (2) angeordneten unvulkanisierten Reifens (T) anzuordnen ist und die mit einem Fluid aufblasbar ist, um den unvulkanisierten Reifen (T) gegen die Vulkanisierform (2) zu pressen,
ein Versorgungsmittel (4) zum Zuführen des Fluids zu der Reifenvulkanisierbalganordnung (3), und
ein Auslassmittel (5) zum Auslassen des Fluids aus der Reifenvulkanisierbalganordnung (3),
wobei
die Reifenvulkanisierbalganordnung (3) einen äußeren Balg (8) zur Anlage an der Innenfläche des unvulkanisierten Reifens (T) und einen inneren Balg (9), der innerhalb des äußeren Balgs (8) angeordnet ist, zusammendrückt, und
das Fluid ein erstes Fluid, das zwischen dem äußeren Balg (8) und dem inneren Balg (9) zugeführt wird, und ein zweites Fluid, das der Innenseite der inneren Balgs (9) zugeführt wird, umfasst,
wobei das Versorgungsmittel (4) ein erstes Versorgungsmittel (10) zum Zuführen des ersten Fluids und ein zweites Versorgungsmittel (11) zum Zuführen des zweiten Fluids umfasst,
**dadurch gekennzeichnet, dass**
der äußere Balg (8) einen oberen ersten Wulst (8a), der an der oberen Formhälfte (6) befestigt ist, und einen unteren zweiten Wulst (8b), der an der unteren Formhälfte (7) befestigt ist, aufweist, und der innere Balg (9) einen oberen dritten Wulst (9a), der an der oberen Formhälfte (6) befestigt ist, und einen unteren vierten Wulst (9b), der an der unteren Formhälfte (7) befestigt ist, umfasst,
wobei das erste Versorgungsmittel (10) zwischen dem oberen ersten Wulst (8a) und dem oberen dritten Wulst (9a) angeordnet ist, das zweite Versorgungsmittel (11) innerhalb des unteren vierten Wulstes (9b) angeordnet ist und das Auslassmittel (5) zwischen dem unteren zweiten Wulst (8b) und dem unteren vierten Wulst (9b) angeordnet ist.

2. Reifenvulkanisiervorrichtung (1) nach Anspruch 1, wobei, wenn die Reifenvulkanisierbalganordnung (3) aufgeblasen ist, ein Strömungsweg (P1), in dem das erste Fluid strömt, zwischen dem äußeren Balg (8) und dem inneren Balg (9) gebildet ist.

3. Reifenvulkanisiervorrichtung (1) nach Anspruch 1 oder 2, wobei das erste Fluid Dampf ist.

4. Reifenvulkanisiervorrichtung (1) nach Anspruch 1, 2 oder 3, wobei das zweite Fluid Dampf, Stickstoffgas oder Heißwasser ist.

5. Reifenvulkanisiervorrichtung (1) nach einem der Ansprüche 1-4, wobei in der Reifenvulkanisierbalganordnung (3) nur ein innerer Balg (9) innerhalb des äußeren Balgs (8) angeordnet ist.

6. Reifenvulkanisiervorrichtung (1) nach einem der Ansprüche 1-5, wobei in der Reifenvulkanisierbalganordnung (3) eine Vielzahl von inneren Bälgen (9) innerhalb des äußeren Balgs (8) angeordnet ist.

## Revendications

1. Appareil de vulcanisation de pneumatique (1) comprenant :
un moule de vulcanisation (2) destiné à mouler-vulcaniser un pneumatique non vulcanisé (T), le moule de vulcanisation (2) comprenant une matrice supérieure (6) qu'il s'agit de disposer sur le côté supérieur du pneumatique non vulcanisé (T) et une matrice inférieure (7) qu'il s'agit de disposer sur le côté inférieur du pneumatique non vulcanisé (T),
un assemblage de poche de vulcanisation de pneumatique (3) qu'il s'agit de disposer dans la cavité interne du pneumatique non vulcanisé (T) disposé dans le moule de vulcanisation (2), et pouvant être gonflé avec un fluide de manière à presser le pneumatique non vulcanisé (T) contre le moule de vulcanisation (2),
un moyen d'alimentation (4) destiné à alimenter le fluide vers l'assemblage de poche de vulcanisation de pneumatique (3), et
un moyen d'évacuation (5) destiné à évacuer le fluide hors de l'assemblage de poche de vulcanisation de pneumatique (3),
dans lequel
l'assemblage de poche de vulcanisation de pneumatique (3) comprime une poche extérieure (8) destinée à venir en butée sur la surface interne du pneumatique non vulcanisé (T), et une poche intérieure (9) disposée à l'intérieur de la poche extérieure (8), et
le fluide inclut un premier fluide alimenté entre la poche extérieure (8) et la poche intérieure (9), et un second fluide alimenté vers l'intérieur de la poche intérieure (9),
dans lequel le moyen d'alimentation (4) comprend un premier moyen d'alimentation (10) destiné à alimenter le premier fluide, et un second moyen d'alimentation (11) destiné à alimenter le second fluide,
**caractérisé en ce que**
la poche extérieure (8) comprend un premier bourrelet supérieur (8a) fixé à la matrice supérieure (6) et un second bourrelet inférieur (8b) fixé à la matrice inférieure (7), et la poche intérieure (9) comprend un troisième bourrelet supérieur (9a) fixé à la matrice supérieure (6) et un quatrième bourrelet inférieur (9b) fixé à la matrice inférieure (7),
le premier moyen d'alimentation (10) étant disposé entre le premier bourrelet supérieur (8a) et le troisième bourrelet supérieur (9a), le second moyen d'alimentation (11) étant disposé à l'intérieur du quatrième bourrelet inférieur (9b), et le moyen d'évacuation (5) étant disposé entre le second bourrelet inférieur (8b) et le quatrième bourrelet inférieur (9b).

2. Appareil de vulcanisation de pneumatique (1) selon la revendication 1, dans lequel, quand l'assemblage de poche de vulcanisation de pneumatique (3) est gonflé, un trajet d'écoulement (P1), dans lequel le premier fluide s'écoule, est formé entre la poche extérieure (8) et la poche intérieure (9).

3. Appareil de vulcanisation de pneumatique (1) selon la revendication 1 ou 2, dans lequel le premier fluide est de la vapeur.

4. Appareil de vulcanisation de pneumatique (1) selon la revendication 1, 2 ou 3, dans lequel le second fluide est de la vapeur, de l'azote gazeux ou de l'eau chaude.

5. Appareil de vulcanisation de pneumatique (1) selon l'une quelconque des revendications 1 à 4, dans lequel, dans l'assemblage de poche de vulcanisation de pneumatique (3), une seule poche intérieure (9) est disposée à l'intérieur de la poche extérieure (8).

6. Appareil de vulcanisation de pneumatique (1) selon l'une quelconque des revendications 1 à 5, dans lequel, dans l'assemblage de poche de vulcanisation de pneumatique (3), une pluralité de poches intérieures (9) sont disposées à l'intérieur de la poche extérieure (8).
